Europäisches Patentamt

European Patent Office

Office européen des brevets

(19)

(11) Veröffentlichungsnummer: **0 182 281**
**B1**

(12) # EUROPÄISCHE PATENTSCHRIFT

(45) Veröffentlichungstag der Patentschrift: 03.10.90

(51) Int. Cl.⁵: **G 05 B 19/405**

(21) Anmeldenummer: **85114453.5**

(22) Anmeldetag: **13.11.85**

(54) **Nähprozessoranordnung.**

(30) Priorität: **13.11.84 DE 3441485**

(43) Veröffentlichungstag der Anmeldung:
**28.05.86 Patentblatt 86/22**

(45) Bekanntmachung des Hinweises auf die
Patenterteilung:
**03.10.90 Patentblatt 90/40**

(84) Benannte Vertragsstaaten:
**BE DE IT**

(56) Entgegenhaltungen:
EP-A-0 148 281
DE-A-2 938 040
GB-A-2 038 035
GB-A-2 086 079
US-A-4 071 911
US-A-4 471 462

(73) Patentinhaber: **Quick-Rotan Elektromotoren
GmbH
Gräfenhäuser Strasse 85
D-6100 Darmstadt (DE)**

(72) Erfinder: **Hülshoff, Hartmut, Dr.-Ing.
Prinz-Karl-Strasse 12
D-7107 Bad Wimpfen (DE)**
Erfinder: **Luft, Michael, Dipl.-Ing. (FH)
Büschelstrasse 21
D-6100 Darmstadt-Eberstadt (DE)**
Erfinder: **Schütz, Ulrich, Dipl.-Ing. (TH)
Aumühlerweg 6
D-6100 Darmstadt-Arheiligen (DE)**
Erfinder: **Kothe, Peter, Dipl.-Ing.
Beerbacher Strasse 16
D-6100 Darmstadt-Eberstadt (DE)**

(74) Vertreter: **Schwan, Gerhard, Dipl.-Ing.
Elfenstrasse 32
D-8000 München 83 (DE)**

Courier Press, Leamington Spa, England.

**Beschreibung**

Die Erfindung betrifft eine Nähprozessoranordnung zur Ablaufsteuerung einer Nähvorrichtung samt Zusatzaggregaten und zur Drehzahlregelung eines die Nähvorrichtung antreibenden Positionierantriebes mit einem z.B. eine Wortbreite von 8 bit umfassenden, Mikroprozessor und einem an den Mikroprozessor angeschlossenen Speicher, wobei sowohl die Ablaufsteuerungseigenschaften als auch die Drehzahlregelungseigenschaften programmierbar sind.

Eine Nähprozessoranordnung dieser Art ist bekannt (DE—A—2 938 040). Die bekannte Anordnung ist jedoch insbesondere noch mit den folgenden Mängeln behaftet:

1. Bei Verwendung eines 1-Chip-Mikroprozessors in ROM-Version liegen alle Parameter fest, oder sie müssen dem Prozessor durch extern angeschaltete Hardware-Elemente, wie Potentiometer oder Trimmer, Drehschalter oder Drehkondensatoren, Programmierbrücken oder -dioden, mitgeteilt werden.

2. Elemente zur Taktung von Endstufen, z.B. den der Elektromagnetkupplung und der Elektromagnetbremse eines für den Antrieb der Nähvorrichtung vorgesehenen Kupplungsmotors (US—A—3 487 438, US—A—3 589 764, US—A—3 761 790) zugeteilten Entstufen, sind den Endstufen fest zugeordnet, sie liegen als Netzwerke zußerhalb des Mikroprozessors und können nur umständlich in Form von Justagevorgängen, nicht aber während des Nähbetriebes verstellt werden.

3. Zeitgleider zur Vorgabe von im Verlauf des Nähablaufs vorgesehenen Zeitintervallen sind als externe Netzwerke aufgebaut und wie die Elemente zur Taktung von Endstufen nur umständlich zu verstellen, sie unterliegen ferner in ihrem Zeitverhalten Bauteilschwankungen.

4. Die Funktionsabläufe und einzelne Funktionen haben über festdefinierte Mikroporzessor-Ausgänge festzugeordnete Endstufen, was bei unterschiedlichen Steuerungsausbaustufen eine große Anzahl von produktionsintensiven Bestückungsvarianten mit sich bringt.

5. Die Einrichtungen zur Drehzahlregelung und Positionierung der Nähvorrichtung liegen in den wesentlichen Teilen außerhalb des Prozessors und sind demnach in ihrer Genauigkeit durch Bauteilschwankungen und Temperaturdriften sehr begrenzt. Außerdem sind sie in ihren Parametern wiederum zur durch umständliche Justagearbeiten zu verändern.

Es ist ferner eine numerische Steuerung für die Durchführung von Ablaufsteuerungsvorgängen bei numerisch gesteuerten Werkzeugmaschinen bekannt (US—A—4 471 462). Dabei weist die eigentliche Steuerungsvorrichtung einen Hauptprozessor auf, der über einen Hauptbus mit einem Hauptspeicher und einer Achsensteuerschaltung verbunden ist. Der Hauptbus steht seinerseits über einen Pufferspeicher mit einer Schnittstellenleitung in Verbindung, die an ein externes Bedienfeld für die Werkzeugmaschine sowie an ein davon getrenntes Bedienfeld zum Testen des Rechnerprogramms und zur Beseitigung von Programmfehlern angeschlossen ist.

Des weiteren ist eine numerische Steuervorrichtung zum Betätigen von Servomechanismen und diskreten Geräten an einer Werkzeugmaschine bekannt (GB—A—2 038 035), die einen Hauptprozessor mit einem Hauptmikroprozessor aufweist, der über einen Hauptdatenbus und einen Hauptadressbus an einen Hauptspeicher angeschlossen ist. Aufgrund von Befehlen, die in Speicher des Hauptprozessors eingespeichert sind und von dessen Mikroprozessor ausgeführt werden, setzt der Hauptprozessor Blöcke von Teileprogrammdaten in Bewegungsbefehlssignale für die Servomechanismen der Werkzeugmaschine um. Zu der Steuervorrichtung gehört ferner ein Bedienfeldprozessor mit einem Bedienfeldmikroprozessor, der an einen Bedienfeldspeicher über einen Bedienfelddatenbus und einen Bedienfeldadressbus angeschlossen und mit Mitteln zum Ankoppeln an den Hauptprocessor, die Tastatur, ein Anzeigegerät, eine Teileprogrammdatenquelle und eine Gruppe von Bedienfeldschaltern versehen ist. Aufgrund von Befehlen, die im Speicher des Bedienfeldprozessors eingespeichert sind und von dessen Mikroprocessor ausgeführt werden, übermittelt der Bedienfeldprozessor von einer Tastatur, von der Teileprogrammdatenquelle und von den Bedienfeldschaltern kommende Daten an den Hauptprozessor, während er von den Hauptprozessor empfangene Daten auf seinem Anzeigegerät weidergibt.

Aus einem nur bei der Prüfung der Neuheit, nicht aber bei der Prüfung der erfinderischen Tätigkeit heranzuziehenden Dokument gemäß Artikel 54 (3) (EP—A1-148 281) ist schließlich eine elektronische Steuereinrichtung für Industrienähmaschinen bekannt, die einen Mikroprozessor, einen nichtflüchtigen, programmierbaren Festwertspeicher, einen Schreib/Lese-Speicher, eine Anzeige- und eine Eingabetastatur aufweist. Der Schreib/Lese-Speicher ist mit einer der maximalen Anzahl von ausführbaren Programmschritten entsprechenden Anzahl von Gruppen von jeweils mittels der Eingabetastatur auswählbaren Speichern zur Speicherung von unterschiedlichen Stichzahlen bei unterschiedlichen Konfektionsgrößen versehen, wobei den der Speicherung der Stichzahlen dienenden Speichern je ein Zähler zugeordnet ist.

Der Erfindung liegt die Aufgabe zugrunde, eine Nähprozessoranordnung zu schaffen, bei welcher sowohl die Ablaufsteuerungseigenschaften als auch die Drehzahlregelungseigenschaften besonders einfach und flexibel eingestellt und bedarfsweise geändert werden können.

Ausgehend von einer Nähprozessoranordnung zur Ablaufsteuerung einer Nähvorrichtung samt Zusatzaggregaten und zur Drehzahlregelung eines die Nähvorrichtung antreibenden Positionierantriebes mit einem z.B. eine Wortbreite von 8 bit umfassenden. Mikroprozessor und einem an den Mikroprozessor angeschlossenen Speicher, wobei sowohl die Ablaufsteuerungseigenschaften als auch die Drehzahlregelungseigenschaften programmierbar sind, wird diese Aufgabe erfindungsgemäß dadurch gelöst, daß

dem Mikroprozessor ein Programmiergerät zur Anlieferung von digitalen Programmiersignalen sowohl für die Drehzahlregelungseigenschaften als auch für die Ablaufsteuerungseigenschaften, einschließlich von-vorbestimmten Winkelstellungen der Hauptwelle der Nähvorrichtung zugeordneten-Blendenwerten softwaremäßig realisierter Blenden zur Auslösung von Funktionen oder zur Abgabe von Signalen, die von der jeweiligen Winkelstellung der Hauptwelle der Nähvorrichtung abhängen, zugeordnet ist,

der Speicher als Langzeitspeicher ausgebildet ist, in den alle für mindestens einen Nähablauf und für die Drehzahlregelung des Positionierantriebs notwendigen, sowohl Nähmaschinenparameter als auch Betriebsdaten umfassenden Parameter einschreibbar und von dort abrufbar sind,

der Mikroprozessor eine Gruppe von Ausgängen mit vorgeschalteten Endstufen aufweist, an denen beliebige Spannungszeitverläufe, z.B. Verzögerungsintervalle und Impulslängen, aufgrund der digitalen Programmiersignale einstellbar sind und an die Aktoren für die Zusatzaggregate der Nähvorrichtung beliebig anschließbar sind,

der Mikroprozessor anhand der digitalen Programmiersignale Zeitglieder mit einstellbaren unterschiedlichen Zeitauflösungen zur Vorgabe von im Verlauf des Nähablaufs zu berücksichtigenden Zeitintervallen und/oder zur Taktung der Endstufen, und einzeln aktivierbare Stichzähler zur Steuerung der Nähvorrichtung und/oder der Zusatzaggregate softwaremäßig darstellt.

Bevorzugte weitere Merkmale und Ausgestaltungen der Erfindung ergeben sich aus den Unteransprüchen.

Bei der erfindungsgemäßen Nähprozessoranordnung sind die Ablaufsteuerungs- und Drehzahlregelfunktionen auf rein digitaler Basis realisiert und integriert sowie in dem Mikroprozessor konzentriert, dem als Langzeitspeicher vorzugsweise ein EEPROM (beispielsweise ca. 10 Jahre Speicherzeit) zugeordnet ist.

Mittels des Programmiergerätes kann, vorzugsweise über eine serielle Schnittstelle, jedes Funktionselement im Mikroprozessor auch während des Betriebes in einfacher und reproduzierbarer Form mit Parametern versorgt werden. Jeder Parameter und jeder Istwert, beispielsweise die Nähmaschinendrehzahl oder die Nadelposition, können über das Programmiergerät oder ein Bedienfeld abgerufen und sichtbar gemacht werden. Zusätzlich erlaubt im Fehlerfall eine Fehlercode-Anzeige eine sehr genaue Fehlerdiagnose, da alle Elemente auf digitaler Basis (im Mikroprozessor) der Analyse zugänglich sind.

Die vorzugsweise vorgesehene Bitverdichtung und Bitexpansion erlaubt eine verbesserte Platzausnutzung des Langzeitspeichers. Über einen Nähmaschinenstecker oder -adapter läßt sich von einer Nähprozessorsteuerung die zugehörige Nähmaschine automatisch erkennen, um bei Differenzen zwischen Steuerung und Nähmaschinentyp mögliche zerstörende Fehlfunktionen zu unterbilden. Eine solche vorteilhafte Lösung ist im übrigen nicht auf Nähprozessoranordnungen mit integrierter, digital programmierbarer Ablaufsteuerung und Drehzahlregelung beschränkt, sondern auch bei anderen Nähantrieben anwendbar, beispielsweise Antrieben, wie sie aus der DE—OS 29 38 040 bekannt sind.

Eine Lösung mit einem einzigen 8-Bit-Mikroprozessor ist besonders kostengünstig, und sie gestattet eine einfache Parameterversorgung der Funktionselemente.

Die Erfindung ist im folgenden anhand eines bevorzugten Ausführungsbeispiels näher erläutert. In den beiliegenden Zeichnungen zeigen:

Fig. 1 ein Prinzipschaltbild einer programmierbaren digitalen Prozessoranordnung nach der Erfindung zur Ablaufsteuerung von Nähautomaten oder Nähmaschinen,

Fig. 2 ein Beispiel einer Software-Struktur der Prozessoranordnung nach Fig. 1 mit Verstellmöglichkeiten durch Parameter,

Fig. 3 ein Beispiel einer Bitkomprimierung und Bitexpansion durch das Ladeprogramm,

Fig. 4 eine Darstellung des Zusammenwirkens von Nähprozessor, Langzeitspeicher und Programmiergerät,

Fig. 5 eine Darstellung der freien Zuordnung von Ausgängen zu Ausgangsfunktionen, sowie

Fig. 6 schematisch ein verkettetes Nähsystem.

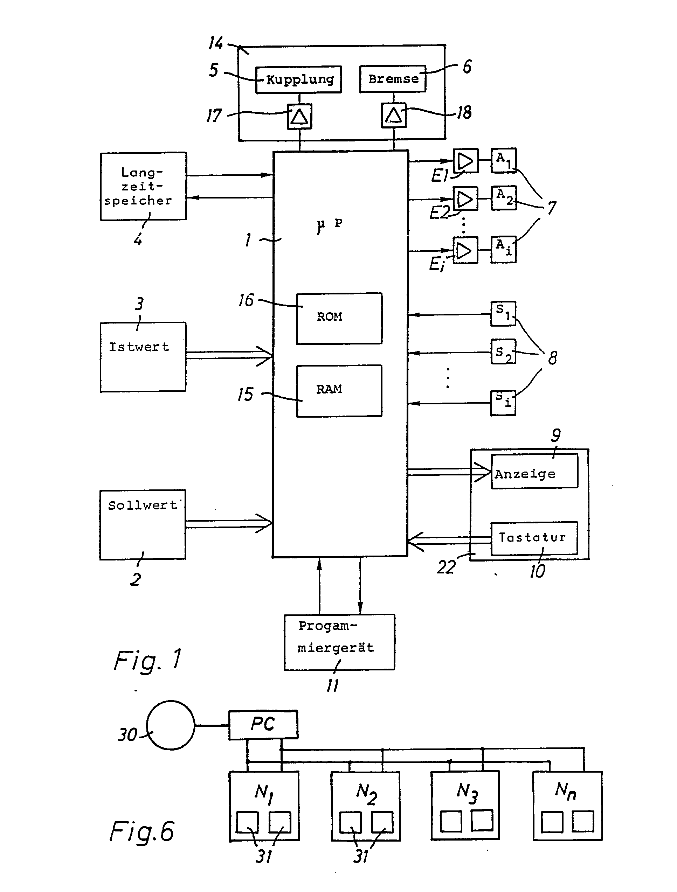

Fig. 1 zeigt eine digital programmierbare Einrichtung zur Ablaufsteuerung unterschiedlicher Nähautomaten oder Nähmaschinen sowie zur gleichzeitigen Drehzahlregelung und Positionierung des jeweils zugehörigen Antriebes, der vorzugsweise als Kupplungsmotorantrieb ausgelegt sein kann. Solche Antriebe sind u.a. aus den oben genannten US-Patentschriften bekannt und bedürfen infolgedessen vorliegend keiner näheren Erläuterung.

Die veranschaulichte Anordnung weist einen Mikroprozessor 1 auf, dessen RAM-Speicher bei 15 und dessen ROM-Speicher bei 16 angedeutet sind. Die Programmierung der Einrichtung erfolgt entweder mittels eines Programmiergerätes 11 über eine serielle Schnittstelle oder mittels eines externen Bedienfeldes 22 über eine Parallelschnittstelle. Gegebenenfalls kann das Bedienfeld auch für einen Anschluß über eine Serielle Schnittstelle ausgelegt sein. Das Programmiergerät 11 kann im Taschenrechnerformat ausgelegt, d.h. beispielsweise ein einfacher handelsüblicher, batteriegespeister Taschenrecher, sein. Es kann sich dabei aber auch um einen übergeordneten Rechner, beispielsweise in Form eines Personal Computers (PC) handeln.

Die einschreibbaren und auslesbaren Daten können insbesondere Nähmaschinenparameter wie

verschiedene Drahzahlsollwerte:

verschiedene Werte für vorbestimmte Zeitabläufe (insbesondere Verzögerungsintervalle und Impulslängen);

verschiedene Stichlängen für Anfangs- und Endriegel sowie für die eigentliche Naht;

verschiedene Steuerbefehle für der Steuerung des Nähablaufs dienende Schalter, derart, daß bei Erkennung bestimmter Zustände, z.B. durch das Ansprechen von Lichtschranken, bestimmte Funktionen, z.B. eine Start/Stop-Funktion, ausgelöst oder nicht ausgelöst werden;

Mischfunktionen, vor allem Kombinationen aus Sollwerten für die Drehzahl und/oder die Stichlänge mit Schaltersteuerbefehlen.

darstellen. Daneben lassen sich aber auch Betriebsdaten eingeben und auslesen, z.B. in Form von

Stückzählungen der genähten Teile;

Stichzahlsummen für vorbestimmte Zeitintervalle;

Aktiv- und/oder Ruhezeiten der Nähmaschine in einem vorbestimmten Zeitintervall;

Werkstückcodes des gerade genähten Nähgutes.

Über die serielle Schnittstelle können ferner Klartextenweisungen zur Anzeige auf LCD oder dergleichen für Anweisungen an die Näherin eingeschrieben werden. Beispiele dafür sind die Reihenfolge von Nähten oder Natprogrammen oder vorgegebene Produktions-Sollzeiten für bestimmte Nähaufgaben.

Das externe Bedienfeld weist eine Anzeige 9 und eine Tastatur 10 auf. Dem Mikroprozessor 1 ist ein Langzeitspeicher 4 zugeordnet, der vorzugsweise als EEPROM ausgelegt ist. Der Positionierantrieb selbst ist bei 14 angedeutet. Es handelt sich um einen Kupplungsmotorantrieb mit einer Elektromagnetkupplung 5 und einer Elektromagnetbremse 6, die über Endstufen 17 bzw. 18 unmittelbar vom Mikroprozessor 1 angesteuert, vorzugsweise getaktet, werden. Dem Mikroprozessor 1 gehen, ebenfalls auf digitaler Basis, Eingangssignale von einem die Ist-Drehzahl des Positionierantriebs 14 bestimmenden Drehzahlmesser 3, z.B. einem Inkrementalgeber oder Tachometer, sowie von einem Sollwertgeber 2 zu, der die Solldrehzahl des Nähantriebes angibt und der beispielsweise in das übliche Pedal der Nähmaschine eingebaut sein kann. Über Endstufen $E_1$, $E_2$...$E_i$ werden vom Mikroprozessor 1 insgesamt mit 7 bezeichnete Aktoren $A_1$, $A_2$...$A_i$ angesteuert, die insbesondere Zusatzaggregaten der Nähmaschine für Fadenschneiden, Fadenwischen, Transportumstellung, Drückerfußbetätigung und dergleichen zugeordnet sind. Sensor- und Schalterabfragen $S_1$, $S_2$...$S_i$ sind insgesamt mit 8 bezeichnet und versorgen den Mikroprozessor 1 mit Sensor- und Schalterabfragesignalen.

Bisher übliche Einstellelemente, wie Potentiometer, Timer, Drehschalter, Programmierbrükken, Programmierdioden, Drehkondensatoren und dergleichen, entfallen, da alle Elemente der vorliegenden Einrichtung, wie Drehzahlregelung, Positionierung, Inkremental- und Stichzählung, Zeitgleicher, die Sensor- und Schalterabfragen, die Endstufenansteuerung, die Taktung der Endstufen und Aktoren usw., auf digitaler Basis arbeiten und in der Prozessoranordnung zusammengefaßt sind. Der Drehzahlmesser 3 des Nähantriebes, der Sollwertgeber 2, die Anzeige 9, die Tastatur 10 und der Langzeitspeicher 4 sind unmittelbar an den Mikroprozessor 1 angeschlossen.

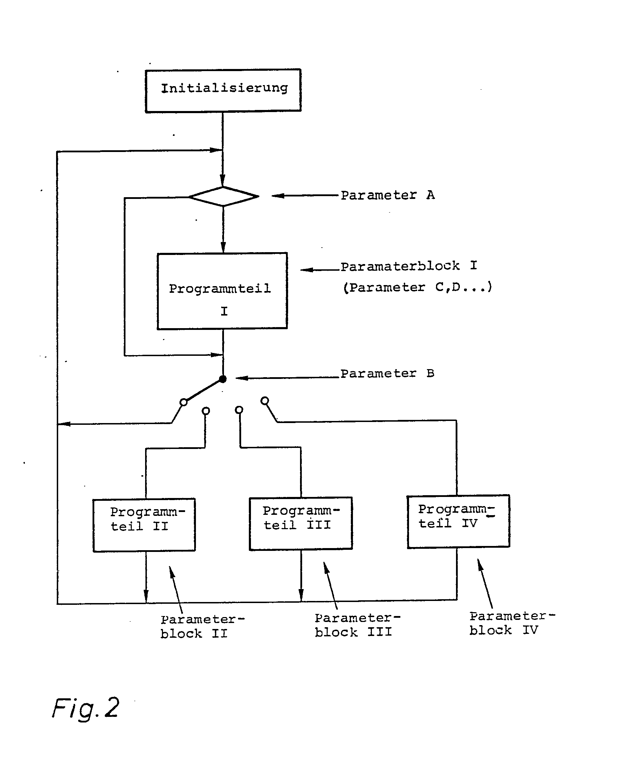

Fig. 2 zeigt eine einfache Software-Struktur mit verschiedenen Programmteilen (Programmteile I—IV), die abhängig von Parametern A und B miteinander verknüpft werden können.

Der Parameter A gestattet ein bedingtes Überspringen des Programmteils I, während der Parameter B eine von vier Verzweigungsmöglichkeiten einstellt. In derselben Weise wirkt auch ein Teil der Parameter aus den Parameterblöcken I—IV innerhalb der Programmteils I—IV. Der Größere Teil dieser Parameter sind jedoch Größen, die auf programminterne Berechnungen Einfluß ausüben und damit den Spannungszeitverlauf an den Ausgängen des Nähprozessors direkt bestimmen (z.B. Tastverhältnisse). Jedes der Programmteile bedient eine Teilmenge aller vorhandenen Ausgänge.

Bis auf die Parameter liegt die gesamte Software-Struktur im ROM-Speicher 16 des Nähprozessors 1. Alle Programmteile sind jedoch so universell gestaltet, daß mit ihnen bei geeigneter Wahl der Parameter alle bislang bekannten Anforderungen an Ablaufsteuerungen von Nähmaschinen bzw. Nähautomaten und an die Regelung des Positionierantriebes 14 erfüllt werden können.

Der komplette Parametersatz steht in dem Langzeitspeicher 4, vorzugsweise einen EEPROM. Hier liegt er aus Gründen der Speicherplatzeinsparung in komprimierter Form vor.

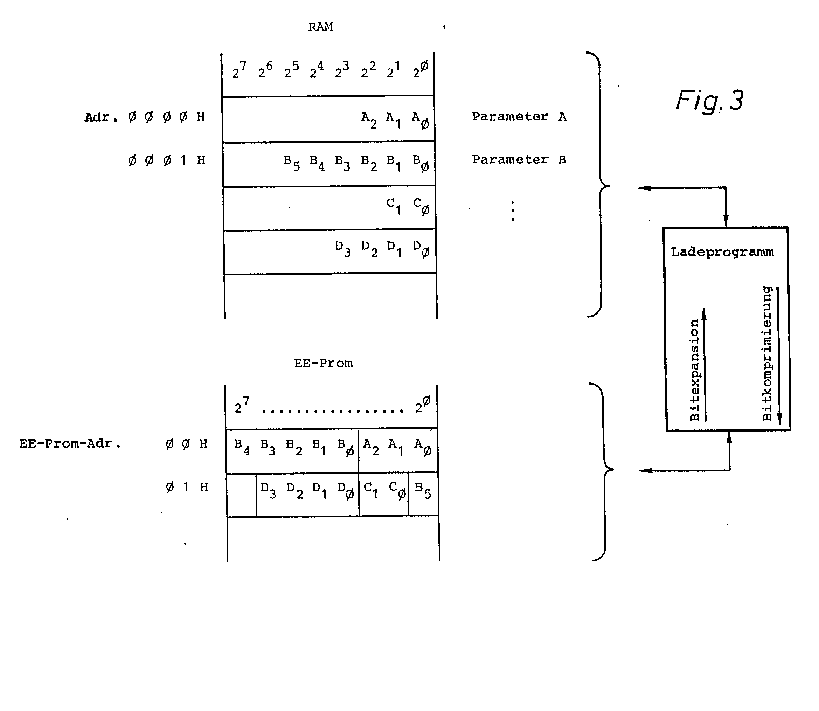

Mit dem Einschalten der Steuerung wird innerhalb einer Initialisierungsroutine des Nähprozessors ein Ladeprogramm aktiviert, das die komprimieren Daten im Langzeitspeicher 4 über eine serielle Verbindung per Befehl nacheinander abruft, eine Bitexpansion durchführt und die expandierten Daten dann als Parameter an fest definierte Adressen in den RAM-Speicher 15 des Nähprozessors 1 schreibt, wie dies in Fig. 3 dargestellt ist.

Die verschiedenen Programmteile nach Fig. 2 sind in der Lage, sich im direkten Speicherzugriff, und damit schnellstmöglich, der einzelnen Parameter zu bedienen.

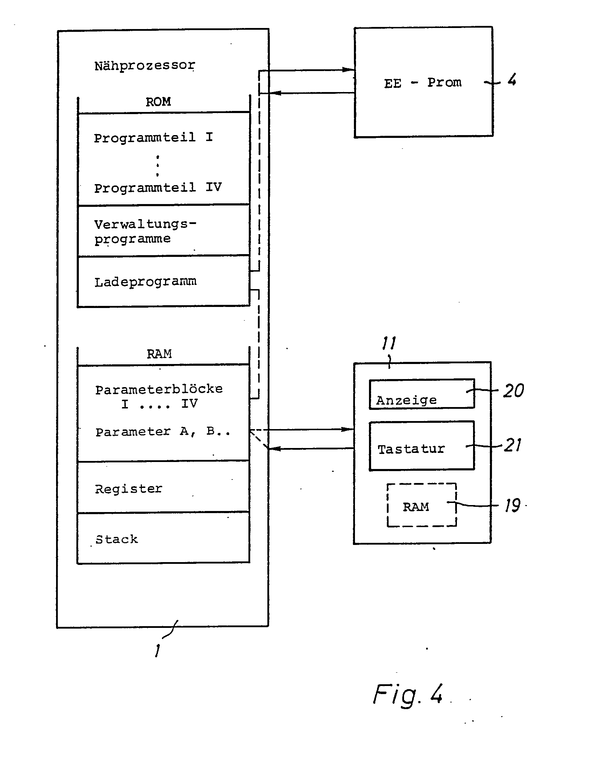

Fig. 4 zeigt eine Detaildarstellung aus Fig. 1 und veranschaulicht das Zusammenwirken von Nähprozessor 1, Langzeitspeicher 4 und Programmiergerät 11. Die Kommunikation zwischen dem Programmiergerät 11 oder einem Computer und dem Nähprozessor 1 geschieht über eine serielle Schnittstelle und vorzugsweise asynchron im Software-handshake-Verfahren. Soll per Tastenaufruf ein bestimmter Parameter aus dem RAM-Speicher 15 des Nähprozessors 1 zur Anzeige gebracht werden, sendet das Programmiergerät 11 ein Befehlswort an den Prozessor, das in codierter Form auch die RAM-Adresse enthält, auf der sich der gewünschte Parameter befindet. Innerhalb eines Verwaltungsprogramms, das auch während eines Nähablaufs zyklisch durchlaufen wird, wird das Eintreffen des Befehls erkannt, und die Übertragung des Parameters wird an genau dieselbe Adresse in einem RAM-Speicher 19 des Programmiergerätes 11 durchgeführt. Der hier vorhandene Prozessor bringt den gewünschten Parameter solange zur Anzeige (Anzeigeblock 20), bis ein neuer Befehl über einen Tastensatz 21 erteilt wird. Zustandsparameter (z.B. die aktuelle Drehzahl der Nähmaschine, oder die aktuelle Winkelstellung am Positionierantrieb) werden vom Verwaltungsprogramm nach Abruf durch das Programmiergerät 11 als sich ständig ändernde Größen erkannt. Die Übertragung zum Programmiergerät 11 erfolgt dann zyklisch, um die Anzeige laufend aktualisieren zu können.

Parameter, die das Verhalten der Ablaufsteuerung des Nähautomaten (Nähmaschine), oder die Regelung des Positionierantriebes beeinflussen, gelangen auf Befehl ebenfalls zur Anzeige im Programmiergerät 11. Der angezeigte Wert kann jetzt manuell über die Tastatur 21 verändert und neu in den RAM-Speicher 15 das Nähprozessors 1 eingeschrieben werden. Das Verwaltungsprogramm des Nähprozessors 1 erkennt diesen Vorgang und aktiviert ein Ladeprogramm, das den veränderten Parameter bitkomprimiert in, den Langzeitspeicher 4 schreibt.

Ein weiterer Betriebsmodus des Programmiergerätes 11 erlaubt den Transfer des gesamten RAM-Inhalts vom Nähprozessor 1 in sein eigenes, z.B. statisch gepuffertes RAM 19. Veränderungen von Parametern sind danach auch ohne angeschlossenen Nähprozessor möglich. Zu einem späteren Zeitpunkt kann dann der gesamte RAM-Speicher 15 des Nähprozessors 1 vom RAM-Speicher 19 des Programmiergerätes 11 neu geladen werden. Anschließend wird sofort das Ladeprogramm aktiviert, das nach der Bitkomprimierung den gesamten Langzeitspeicher 4 neu lädt. Transfers der gesamten RAM-Inhalte sind nur vor Beginn des Nähablaufs möglich.

Teilfunktionen des Programmiergerätes 11 kann auch das externe Bedienfeld 22 in Fig. 1 übernehmen. Die Tastatur 10 und die Anzeige 9 sind über einen parallelen Adress-Daten-Bus direkt an den Nähprozessor 1 angeschlossen. Der Nähprozessor 1 erfüllt jetzt zusätzlich zu den Aufgaben der Ablaufsteuerung und der Regelung des Antriebes die zyklische Abfrage der Testatur 10 und die Anzeige der geforderten Parameter. Nur eine definierte Untermenge von Parametern kann so verändert werden.

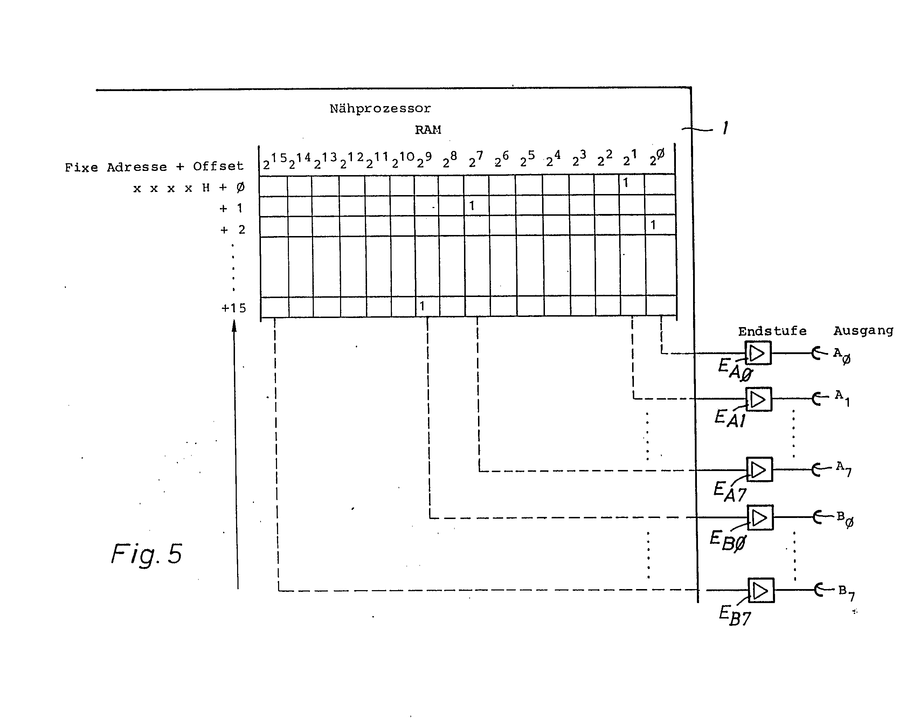

Fig. 5 zeigt die Definition eines speziellen Parameterblocks, der die Zuordnung von genau einer Ausgangsfunktion zu einer bestimmten der Endstufen $E_{A\phi}$, $E_{A1}...E_{A7}$, $E_{B\phi}...E_{B/}$ festlegt, die Ausgängen $A_\phi$, $A_1...A_7$, $B_\phi...B_7$ vorgeschaltet sind.

Dieser Parameterblock (Zuordnungsmatrix) wird durch einen RAM-Bereich im Nähprozessor 1 mit festgelegter Anfangsadresse realisiert. Jeder Ausgangsfunktion ist ein Adressenoffset fest zugeordnet. Im zugehörigen Datenwort ist genau nur eines der Bits $2^{15}-2^\phi$ "Eins", womit einer der Ausgänge $A\phi$ bis B7 angesprochen werden kann.

Fig. 6 zeigt schematisch eine Weiterbildung der Efindung, gemäß der eine Mehrzahl von Nähmaschinen $N_1$ bis $N_n$ über einen gemeinsam zugeordneten Rechner PC, z.B. einen Personal Computer, parallel angesteuert sind. Die erforderlichen digitalen Daten kommen dabei aus einem Hauptspeicher 30, beispielsweise in Form eines Plattenspeichers. Jede der Nähmaschinen ist mit mindestens einem Pufferspeicher 31 ausgestattet. Beispielsweise kann die Auslegung derart getroffen sein, daß bei Verwendung eines Pufferspeichers 31 in diesen die digitalen Daten für den jeweils nächsten Nähablauf von dem Hauptspeicher 30 kommend bei Zwischenstops der Nähmaschine eingespeichert werden, beispielsweise beim Umdrehen des betreffenden Nähgutes. Stehen keine oder keine ausreichend langen Zwischenstops zur Verfügung, kann jede Nähmaschine in der in Fig. 5 angedeuteten Weise mit zwei Pufferspeichern 31 versehen sein, wobei aus dem Hauptspeicher 30 über den Rechner PC der Datensatz für den nächsten Nähablauf eingelesen wird, während in dem anderen Pufferspeicher 31 die Daten für den gerade durchgeführten Nähablauf abgearbeitet werden (Wechselpufferbetrieb). Eine Verkettung des Produktionsablaufs gemäß Fig. 6 erlaubt eine optimale Steuerung des Materialflusses, wenn z.B. an den Nähmaschinen $N_1$ bis $N_n$ unterschiedliche aufeinanderfolgende Näharbeiten durchgeführt werden sollen. Hat beispielsweise aufgrund einer Störung die Nähmaschine $N_2$ eine geringere Anzahl von Werkstücken bearbeitet als die Nähmaschine $N_1$, kann durch entsprechende Befehlseingabe dafür gesorgt werden, daß vorübergehend aus dem Hauptspeicher 30 für die Nähmaschinen $N_2$ und $N_3$ die gleichen Datensätze ausgelesen werden und damit beide Nähmaschinen vorübergehend die gleichen Arbeitsgänge ausführen, bis der aufgotretene Stau beseitigt ist.

Um im Verkettungsbetrieb entsprechend Fig. 6 ein Fehlansprechen zu vermeiden, wenn beispielsweise eine Nähmaschine während eines Datenverkehrs zwischen dem Rechner PC und einer anderen Nähmaschine neu eingeschaltet wird, wird vorzugsweise mit einem fehlersicheren Datenprotokoll gearbeitet, das z.B. vorsieht, daß die Treiber einer bestimmten Nähmaschine nur auf eine bestimmte Anzahl von Bytes ansprechen. Um den Treiberaufbau einfach zu halten, ist zweckmäßig dafür gesorgt, daß die Anzahl der notwendigen Bytes für alle Übertragungsfälle die gleiche ist.

Die Positiongeber bekannter industrieller Nähmaschinen oder Nähautomaten sind mit mechanischen Blenden ausgestattet, um in Abhängigkeit von der jeweiligen Winkelstellung der Nahmaschinenhauptwelle spezielle Funktionen auszulösen oder spezielle Signale, beispielsweise das Fadenschneidsignal, zu geben. Im Rahmen der vorliegenden Erfindung wird an Stelle einer solchen mechanischen Blende eine softwaremäßige Blende oder "teach-in"-Blende in der Weise vorgesehen, daß über das Bedienfeld 22 an den Positionen, die den Blendenrändern entsprechen, geeignete Signale initiiert werden. Mechanische Blenden können dadurch vollkommen entfallen. Es wird eine wesentlich flexiblere Anpassung an unterschiedliche Aufgaben möglich, weil nur über das Bedienfeld eine entsprechende Umprogrammierung vorzunehmen ist.

In ähnlicher Weise wie mit einer digital einstellbaren Blende kann auch mit einer digital abstimmbaren Lichtschranke gearbeitet werden, um beispielsweise das Vorliegen oder Nichtvorliegen vom Nähgut, die Annäherung an den Rand des Nähgutes oder dergleichen zu erfassen. Solche als Reflexions- oder Durchsichtschranken ausgebildeten Lichtschranken müssen auf die jeweilige Nähgutart eingestellt werden. Dies kann im Rahmen der Erfindung gleichfalls über das externe Bedienfeld gescheben, und der betreffende Wert kann im Speicher digital abgespeichert werden. Der abgespeicherte Datenwert kann bei dem verketteten System gemäß Fig. 6 aus dem Hauptspeicher 30 abgerufen und für beliebige der Nähmaschinen N₁ bis Nₙ genutzt werden. Gleiches gilt im Falle des Verkettungssystems für alle anderen Datensätze, sofern nur die verwendeten Nähmaschinen untereinander gleichartig aufgebaut sind.

**Patentansprüche**

1. Nähprozessoranordnung zur Ablaufsteuerung einer Nähvorrichtung samt Zusatzaggregaten und zur Drehzahlregelung eines die Nähvorrichtung antreibenden Positionierantriebes mit einem z.B. eine Wortbreite von 8 bit umfassenden, Mikroprozessor (1) und einem an den Mikroprozessor angeschlossenen Speicher (4), wobei sowohl die Ablaufsteuerungseigenschaften als auch die Drehzahlregelungseigenschaften programmierbar sind, dadurch gekennzeichnet, daß

dem Mikroprozessor (1) ein Programmiergerät (11) zur Anlieferung von digitalen Programmiersignalen sowohl für die Drehzahlregelungseigenschaften als auch für die Ablaufsteuerungseigenschaften, einschließlich von-vorbestimmten Winkelstellungen der Hauptwelle der Nähvorrichtung zugeordneten-Blendenwerten softwaremäßig realisierter Blenden zur Auslösung von Funktionen oder zur Abgabe von Signalen, die von der jeweiligen Winkelstellung der Hauptwelle der Nähvorrichtung abhängen, zugeordnet ist,

der Speicher als Langzeitspeicher (4) ausgebildet ist, in den alle für mindestens einen Nähablauf und für die Drehzahlregelung des Positionierantriebes (14) notwendigen, sowohl Nähmaschinenparameter als auch Betriebsdaten umfassenden Parameter einschreibbar und von dort abrufbar sind,

der Mikroprozessor (1) eine Gruppe von Ausgängen (A0 bis A7, B0 bis B7) mit vorgeschalteten Endstufen (E₁, E₂...Eᵢ) aufweist, an denen beliebige Spannungszeitverläufe, z.B. Verzögerungsintervalle und Impulslängen, aufgrund der digitalen Programmiersignale einstellbar sind und an die Aktoren (A₁, A₂...Aᵢ) für die Zusatzaggregate der Nähvorrichtung beliebig anschließbar sind,

der Mikroprozessor (1) anhand der digitalen Programmiersignale Zeitglieder mit einstellbaren unterschiedlichen Zeitauflösungen zur Vorgabe von im Verlauf des Nähablaufs zu berücksichtigenden Zeitintervallen und/oder zur Taktung der Endstüfen, und einzeln aktivierbare Stichzähler zur Steuerung der Nähvorrichtung und/oder der Zusatzaggregate softwaremäßig darstellt.

2. Nähprozessoranordnung nach Anspruch 1, dadurch gekennzeichnet, daß die Ablaufsteuerungs- und Drehzahlregelungseigenschaften auch während des Betriebes durch die digitalen Programmiersignale des Programmiergerätes (11) vorgebbar und veränderbar sind.

3. Nähprozessoranordnung nach Anspruch 1 oder 2, gekennzeichnet durch eine Schmittstelle, über welche die Parameter in den Längzeitspeicher (4) einschreibbar und aus dem Langzeitspeicher auslesbar sind.

4. Nähprozessoranordnung nach Anspruch 3, dadurch gekennzeichnet, daß zum Einschreiben und zum Auslesen in dem bzw. aus dem Langzeitspeicher (4) mindestens ein Gerät aus der ein externes Bedienfeld, ein Programmiergerät und einen übergeordneten Rechner umfasssenden Gerätegruppe vorgesehen ist.

5. Nähprozessoranordnung nach Anspruch 3 oder 4, dadurch gekennzeichnet, daß die Schnittstelle als Parallelschnittstelle ausgebildet ist.

6. Nähprozessoranordnung nach Anspruch 3 oder 4, dadurch gekennzeichnet, daß die Schnittstelle als serielle Schnittstelle ausgebildet ist.

7. Nähprozessoranordnung nach einem der vorhergehenden Ansprüche, gekennzeichnet durch eine Bitverdichtung der einzelnen Parameterwerte vor dem Einschreiben in den Langzeitspeicher (4) und eine Bitexpansion der einzelnen Parameterwerte nach dem Auslesen aus dem Langzeitspeicher.

8. Nähprozessoranordnung nach einem der vorhergehenden Ansprüche, gekennzeichnet durch eine Einrichtung (22) mittels deren eine definierbare Untermenge von Parametern veränderbar ist.

9. Nähprozessoranordnung nach einem der vorhergehenden Ansprüche, dadurch gekennzeichnet, daß eine Einrichtung vorgesehen ist, mittels deren wahlweise das Einschreiben, das Auslesen sowie das Einschreiben und das Auslesen in bzw. aus vorgewählten Speicherplätzen des Langzeitspeichers (4) sperrbar ist.

10. Nähprozessoranordnung nach einem der vorhergehenden Ansprüche, dadurch gekennzeichnet, daß einer der Parameter ein Codewort für die zugehörige Nähmaschine ist.

11. Nähprozessoranordnung nach einem der vorhergehenden Ansprüche, gekennzeichnet, durch einen Nähmaschinenstecker oder -adapter zum Erkennen der angeschlossenen Nähmaschine mittels Codewort vor Beginn des Nähablaufs über Sensorleitungen und, bei Nichtübereinstimmung, zur Abgabe eines Fehlercodes, der zur Vermeidung von Fehlfunktionen den Start des gesamten oder eines speziellen Nähablaufs verbindet.

12. Nähprozessoranordnung nach Anspruch 11, dadurch gekennzeichnet, daß in dem Stocker bzw. Adapter ein passives elektrisches Bauelement, vorzugsweise ein Widerstand, angeordnet ist, derart, daß der Wert des Bauelementes, z.B. der Widerstandswert, von der Steuerung ausmeßbar und dadurch erkennbar ist.

13. Nähprozessoranordnung nach einem der vorhergehenden Ansprüche, dadurch gekennzeichnet, daß der Mikroprozessor (1) auch für die Erfassung und Auswertung von Photozellen- und anderen Sensorsignalen genutzt ist.

14. Nähprozessoranordnung nach einem der vorhergehenden Ansprüche, dadurch gekennzeichnet, daß über den Mikroprozessor (1) die Endstufen $(E_1, E_2...E_l)$ mit unterschiedlichen veränderbaren Taktverhältnissen wahlweise taktbar sind.

15. Nähprozessoranordnung nach einem der vorhergehenden Ansprüche, gekennzeichnet durch eine Fehlercode-Anzeige für eine Fehlerdiagnose.

16. Nähprozessoranordnung nach einem der vorhergehenden Ansprüche, dadurch gekennzeichnet, daß die Istwerte der Parameter und die Istwerte von Zustandsgrößen (z.B. Drehzahl oder Nadelposition) über das Programmiergerät (11) oder ein externes Bedienfeld (22) anzeigbar sind.

17. Nähprozessoranordnung nach einem der vorhergehenden Ansrpüche, dadurch gekennzeichnet, daß mehrere Nähvorrichtungen $(N_1, N_2, N_3, N_4)$ über einen gemeinsam zugeordneten Rechner (PC) parallel angesteuert sind.

18. Nähprozessoranordnung nach Anspruch 17, dadurch gekennzeichnet, daß dem gemeinsamen Rechner (PC) ein die Datensätze für den Betrieb der mehreren Nähvorrichtungen $(N_1, N_2, N_3, N_n)$ anliefernder Hauptspeicher (30) zugeordnet ist.

19. Nähprozessoranordnung nach Anspruch 18, dadurch gekennzeichnet, daß jede der mehreren Nähvorrichtungen $(N_1, N_2, N_3, N_n)$ mindestens einen Pufferspeicher (31) aufweist, in den vor einem Nähablauf die dafür notwendigen Daten aus dem Hauptspeicher (30) übernehmbar sind.

20. Nähprozessoranordnung nach Anspruch 19, dadurch gekennzeichnet, daß jeder Nähvorrichtung $(N_1, N_2, N_3, N_n)$ ein Pufferspeicher (31) zugeordnet ist, der während Zwischenstops der Nähvorrichtung die für den nächsten Nähablauf notwendigen Daten aus dem Hauptspeicher (30) übernimmt.

21. Nähprozessoranordnung nach Anspruch 19, dadurch gekennzeichnet, daß jeder Nähvorrichtung $(N_1, N_2, N_3, N_n)$ zwei Pufferspeicher (31) zugeordnet sind und in jeweils einen dieser Pufferspeicher aus dem Hauptspeicher (30) der Datensatz für den nächsten Nähablauf einlesbar ist, während in dem jeweils anderen Pufferspeicher die Daten für den gerade durchgeführten Nähablauf abgearbeitet werden.

22. Nähprozessoranordnung nach einem der vorhergehenden Ansprüche, dadurch gekennzeichnet, daß der Nähvorrichtung mindestens eine durch digitale Programmiersignale einstellbare Lichtschranke zugeordnet ist.

## Revendications

1. Ensemble de processeur de couture pour la commande séquentielle d'une machine à coudre ainsi que de ses accessoires et pour le réglage de la vitesse de rotation d'une commande de positionnement entraînant la machine à coudre, comprenant un microprocesseur (1) d'une longueur de mot de 8 bits, par exemple, et une mémoire (4) connectée à ce microprocesseur, de sorte que les propriétés de commande séquentielle ainsi que les propriétés de réglage de la vitesse de rotation sont programmables, caractérisé en ce que:

une unité de programmation (11) est associée au microprocesseur (1) pour le fourniture de signaux de programmation numériques tant pour les propriétés de réglage de la vitesse de rotation que pour les propriétés de commande séquentielle, y compris des valeurs de diaphragmes réalisées par logiciel, associées à des positions angulaires prédéterminées de l'arbre principal de la machine à coudre, pour le déclenchement de fonctions ou pour l'émission de signaux qui dépendent de la position angulaire respective de l'arbre principal de la machine à coudre,

la mémoire est une mémoire lente (4), dans laquelle peuvent être enregistrés et de laquelle peuvent être extraits tous les paramètres nécessaires pour au moins une séquence de couture et pour le réglage de la vitesse de rotation de la commande de positionnement (14), aussi bien des paramètres de la machine à coudre que des paramètres comprenant des données d'exploitation,

le microprocesseur (1) comporte un groupe de sorties (de A0 à A7, de B0 à B7) avec, en amont, des étages finals $(E_1, E_2,..., E_l)$ dans lesquels des valeurs de tempstension quelconques, par exemple des intervalles de retard et des durées d'impulsions, peuvent être réglées sur base des signaux de programmation numériques et qui peuvent être connectées aux actionneurs $(A_1, A_2,..., A_l)$ pour les accessoires de la machine à coudre,

le microprocesseur (1) présente en logiciel, en s'appuyant sur les signaux de programmation numériques, des éléments à temps offrant diverses résolutions de temps réglables pour prédéfinir des intervalles de temps devant être pris en consideration au cours de la séquence de couture et/ou pour synchroniser les étages finals et des compteurs de points activables isolément pour la commande de la machine à coudre et/ou de ses accessoires.

2. Ensemble de processeur de couture suivant la revendication 1, caractérisé en ce que les propriétés de commande séquentielle et de réglage de la vitesse de rotation peuvent être prédéfinies et modifiées par les signaux de programmation numériques de l'unité de programmation (11) même pendant le fonctionnement.

3. Ensemble de processeur de couture suivant la revendication 1 ou 2, caractérisé par une interface par l'intermédiaire de laquelle les paramètres peuvent être enregistrés dans la mémoire lente (4) et peuvent être extraits de celle-ci.

4. Ensemble de processeur de couture suivant la revendication 3, caractérisé en ce que, pour l'enregistrement dans la mémoire lente (4) et l'extraction hors de celle-ci, au moins un appareil du groupe d'appareils comprenant un tableau de commande externe, une unité de programmation et un ordinateur central, est prévu.

5. Ensemble de processeur de couture suivant la revendication 3 ou 4, caractérisé en ce que l'interface est une interface parallèle.

6. Ensemble de processeur de couture suivant la revendication 3 ou 4, caractérisé en ce que l'interface est une interface série.

7. Ensemble de processeur de couture suivant l'une quelconque des revendications précédentes, caractérisé par une compression des bits des valeurs de paramètres individuelles avant l'enregistrement dans la mémoire lente (4) et une expansion des bits des valeurs de paramètres individuelles après l'extraction hors de la mémoire lente.

8. Ensemble de processeur de couture suivant l'une quelconque des revendications précédentes, caractérisé par un dispositif (22) par l'intermédiaire duquel un sousensemble définissable de paramètres peut être modifié.

9. Ensemble de processeur de couture suivant l'une quelconque des revendications précédentes, caractérisé en ce qu'un dispositif est prévu par l'intermédiaire duquel, au choix, l'enregistrement ou la lecture ainsi que l'enregistrement et l'extraction, respectivement, dans et hors des emplacements de stockage prédéterminés de la mémoire lente (4), peuvent être bloqués.

10. Ensemble de processeur de couture suivant l'une quelconque des revendications précédentes, caractérisé en ce qu'un des paramètres est un mot de code pour la machine à coudre correspondante.

11. Ensemble de processeur de couture suivant l'une quelconque des revendications précédentes, caractérisé par une fiche ou un adaptateur de machine à coudre propre à reconnaître la machine à coudre connectée à l'aide d'un mot de code avant le début de la séquence de couture via des lignes de capteurs et, en cas de non-concordance, à émettre un code d'erreur qui empêche le démarrage de l'ensemble de la séquence de couture ou d'une séquence particulière, de manière à éviter un fonctionnement erroné.

12. Ensemble de processeur de couture suivant la revendication 11, caractérisé en ce que dans la fiche ou l'adaptateur, un composant électrique passif, de préférence une résistance, est prévu de telle façon que la valeur du composant, par exemple la valeur de la résistance, puisse être mesurée par l'unité de commande et être reconnue par celle-ci.

13. Ensemble de processeur de couture suivant l'une quelconque des revendications précédentes, caractérisé en ce que le microprocesseur (1) est également utilisé pour l'acquisition et l'évaluation de signaux de cellules photoélectriques et d'autres signaux de capteurs.

14. Ensemble de processeur de couture suivant l'une quelconque des revendications précédentes, caractérisé en ce que les niveaux finals ($E_1$, $E_2$,..., $E_i$) peuvent être synchronisés via le microprocesseur (1) à volonté selon diverses conditions de cadençage modifiables.

15. Ensemble de processeur de couture suivant l'une quelconque des revendications précédentes, caractérisé par un affichage du code d'erreur pour un diagnostic d'erreur.

16. Ensemble de processeur de couture suivant l'une quelconque des revendications précédentes, caractérisé en ce que la valeur effective des paramètres et la valeur effective des grandeurs d'état (par exemple la vitesse de rotation ou la position de l'aiguille) peuvent être affichées via l'unité de programmation (11) ou un tableau de commande externe (22).

17. Ensemble de processeur de couture suivant l'une quelconque des revendications précédentes, caractérisé en ce que plusieurs machines à coudre ($N_1$, $N_2$, $N_3$, $N_n$) sont commandées en parallèle via un ordinateur (PC) associé commun.

18. Ensemble de processeur de couture suivant la revendication 17, caractérisé en ce qu'une mémoire centrale fournissant les blocs de données pour le fonctionnement de diverses machines à coudre ($N_1$, $N_2$, $N_3$, $N_n$) est associée à l'ordinateur (PC) commun.

19. Ensemble de processeur de couture suivant la revendication 18, caractérisé en ce que chacune des diverses machines à coudre ($N_1$, $N_2$, $N_3$, $N_n$) comporte au moins une mémoire-tampon (31) pouvant recevoir de la mémoire centrale (30), avant une séquence de couture, les données nécessaires à cette séquence.

20. Ensemble de processeur de couture suivant la revendication 19, caractérisé en ce que chaque machine à coudre ($N_1$, $N_2$, $N_3$, $N_n$) est associée à une mémoire-tampon (31) qui, durant les arrêts intermédiaires de la machine à coudre, reçoit de la mémoire centrale (30), les données nécessaires pour la séquence de couture suivante.

21. Ensemble de processeur de couture suivant la revendication 19, caractérisé en ce que deux mémoirestampons (31) sont associées à chaque machine à coudre ($N_1$, $N_2$, $N_3$, $N_n$) et que dans l'une de ces mémoires-tampons peuvent chaque fois être introduites, à partir de la mémoire centrale (30), les blocs de données nécessaires pour la séquence de couture suivante, alors que dans l'autre mémoire-tampon sont traitées les données pour la séquence de couture en cours d'exécution.

22. Ensemble de processeur de couture suivant l'une quelconque des revendications précédentes, caractérisé en ce que la machine à couture est associée au moins à un barrage photoélectrique réglable par des signaux de programmation numériques.

**Claims**

1. A sewing processor arrangement for the sequence control of a sewing device together with auxiliary units and for the speed control of a positioning drive driving the sewing device, having a microprocessor (1) comprising a word width of 8 bits for example, and a store (4) connected to the microprocessor, both the sequence control characteristics and the speed control characteristics being able to be programmed, characterised in that:

associated with the microprocessor (1) is a programming device (11) to supply digital programming signals both for the speed control characteristics and for the sequence control characteristics, including aperture values—associated with predetermined angular positions of the main shaft of the sewing device—of diaphragms realized by means of software, to initiate functions or to deliver signals which depend on the current angular position of the main shaft of the sewing device,

the store is constructed in the form of a long-term store (4) in which all the parameters necessary for at least one sewing cycle and for the speed control of the positioning drive (14), and comprising both sewing-machine parameters and operational data can be written and from which they can be fetched,

the microprocessor (1) comprises a group of outputs (A0 to A7, B0 to B7) with preceding final stages $(E_1, E_2...E_i)$ at which any desired voltage-time curves can be set, for example delay-time intervals and pulse lengths, as a result of the digital programming signals, and which can be connected as desired to the actuators $(A_1, A_2...A_i)$ for the auxiliary units of the sewing device,

the microprocessor (1) represents by means of software with the aid of the digital programming signals, time function elements with different adjustable time resolutions for the presetting of time intervals to be taken into account in the course of the sewing cycle and/or for timing the final stages, and switch counters which can be activated individually to control the sewing device and/or the auxiliary units.

2. A sewing processor arrangement according to Claim 1, characterized in that the sequence control and speed control characteristics can be preset and are variable even during operation, by the digital programming signals of the programming device (11).

3. A sewing processor arrangement according to Claim 1 or 2, characterised by an interface via which the parameters can be written in the long-term store (4) and can be read out of the long-term store.

4. A sewing processor arrangement according to Claim 3, characterised in that at least one device from the group of devices comprising an external control panel, a programming device and an overriding computer is provided for the writing and reading in and out of the long-term store (4).

5. A sewing processor arrangement according to Claim 3 or 4, characterised in that the interface is constructed in the form of a parallel interface.

6. A sewing processor arrangement according to Claim 3 or 4, characterised in that the interface is constructed in the form of a serial interface.

7. A sewing processor arrangement according to any one of the preceding Claims, characterised by a bit compression of the individual parameter values before they are written in the long-term store (4) and a bit expansion of the individual parameter values after they have been read out of the long-term store.

8. A sewing processor arrangement according to any one of the preceding Claims, characterised by a device (22) by means of which a definable subset of parameters is variable.

9. A sewing processor arrangement according to any one of the preceding Claims, characterised in that a device is provided by means of which the write-in, the read-out as well as the write-in and the read-out, in or out of preselected store locations of the long-term store (4) can be selectively inhibited.

10. A sewing processor arrangement according to any one of the preceding Claims, characterised in that one of the parameters is a code word for the associated sewing machine.

11. A sewing processor arrangement according to any one of the preceding Claims, characterised by a sewing-machine plug or adapter for recognizing the sewing machine connected up, by means of a code word before the beginning of the sewing cycle, via sensor lines and, in the event of non-coincidence, for the delivery of an error code which prevents the start of the whole or of a special sewing cycle in order to avoid faulty operations.

12. A sewing processor arrangement according to Claim 11, characterised in that a passive electrical component, preferably a resistor, is disposed in the plug or adapter in such a manner that the value of the component, for example the resistance value, can be measured by the control and is recognizable as a result.

13. A sewing processor arrangement according to any one of the preceding Claims, characterised in that the microprocessor (1) is also used for the detection and evaluation of photoelectric-cell and other sensor signals.

14. A sewing processor arrangement according to any one of the preceding Claims, characterised in that the final stages $(E_1, E_2...E_i)$ can be selectively timed with different variable timing ratios via the microprocessor (1).

15. A sewing processor arrangement according to any one of the preceding Claims, characterised by an error code display for a fault diagnosis.

16. A sewing processor arrangement according to any one of the preceding Claims, characterised in that the actual values of the parameters and the actual values of state variables (for example speed or needle position) can be indicated via the programming device (11) or an external control panel (22).

17. A sewing processor arrangement according to any one of the preceding Claims, characterised in that a plurality of sewing devices $(N_1, N_2, N_3, N_n)$ are controlled in parallel through a computer (PC) associated with them jointly.

18. A sewing processor arrangement according to Claim 17, characterised in that a main store (30) delivering the data records for the operation of the plurality of sewing devices ($N_1$, $N_2$, $N_3$, $N_n$) is associated with the common computer (PC).

19. A sewing processor arrangement according to Claim 18, characterised in that each of the plurality of sewing devices ($N_1$, $N_2$, $N_3$, $N_n$) comprises at least one buffer store (31) into which, before a sewing cycle, the data necessary for the latter can be transferred from the main store (30).

20. A sewing processor arrangement according to Claim 19, characterised in that associated with each sewing device ($N_1$, $N_2$, $N_3$, $N_n$) is a buffer store (31) which, during breakpoints of the sewing device, takes over the data necessary for the next sewing cycle from the main store (30).

21. A sewing processor arrangement according to Caim 19, characterised in that two buffer stores (31) are associated with each sewing device ($N_1$, $N_2$, $N_3$, $N_n$) and the data record for the next sewing cycle can be read into one of these buffers stores from the main store (30) while the data for the sewing cycle just being carried out are being handled in the other buffer store.

22. A sewing processor arrangement according to any one of the preceding Claims, characterised in that at least one light barrier which can be adjusted by digital programming signals is associated with the sewing device.

Fig. 1

Fig.6

*Fig.2*

2

*Fig. 3*

Ladeprogramm

Bitkomprimierung →

← Bitexpansion

Parameter A

Parameter B

. . .

RAM

Adr. $\emptyset\ \emptyset\ \emptyset\ \emptyset$ H  $\quad 2^7\ 2^6\ 2^5\ 2^4\ 2^3\ 2^2\ 2^1\ 2^\emptyset$

$\emptyset\ \emptyset\ \emptyset\ 1$ H  $\quad A_2\ A_1\ A_\emptyset$

$B_5\ B_4\ B_3\ B_2\ B_1\ B_\emptyset$

$C_1\ C_\emptyset$

$D_3\ D_2\ D_1\ D_\emptyset$

EE-Prom

EE-Prom-Adr.  $\emptyset\ \emptyset$ H  $\quad 2^7 \ldots\ldots\ldots\ldots\ldots 2^\emptyset$

$B_4\ B_3\ B_2\ B_1\ B_\emptyset\ A_2\ A_1\ A_\emptyset$

$\emptyset\ 1$ H  $\quad D_3\ D_2\ D_1\ D_\emptyset\ C_1\ C_\emptyset\ B_5$

| Nähprozessor | EE - Prom — 4 |

ROM

Programmteil I
:
Programmteil IV

Verwaltungsprogramme

Ladeprogramm

RAM

Parameterblöcke
I .... IV

Parameter A, B..

Register

Stack

1

11

Anzeige — 20

Tastatur — 21

RAM — 19

Fig. 4

Nähprozessor

RAM

Fixe Adresse + Offset $2^{15} 2^{14} 2^{13} 2^{12} 2^{11} 2^{10} 2^9\ 2^8\ 2^7\ 2^6\ 2^5\ 2^4\ 2^3\ 2^2\ 2^1\ 2^0$

x x x x H + $\emptyset$

+ 1

+ 2

+15

Endstufe    Ausgang

$E_{A\emptyset}$ — $A_\emptyset$

$E_{A1}$ — $A_1$

$E_{A7}$ — $A_7$

$E_{B\emptyset}$ — $B_\emptyset$

$E_{B7}$ — $B_7$

1

Fig. 5